# EUROPEAN PATENT SPECIFICATION

(11) **EP 0 333 932 B1**
(45) Date of publication and mention of the grant of the patent: **25.08.1993**
(21) Application number: 88200495.5
(22) Date of filing: 17.03.1988
(51) Int. Cl.: G02B 23/14, G01C 3/08, F41G 1/00

(54) **An apparatus for providing an indication of a range to a target**
Zielentfernungsanzeigevorrichtung
Appareil indiquant la distance d'un cible

(43) Date of publication of application: 27.09.1989
(73) Proprietor: Aktiebolaget Bofors, S-691 80 Bofors (SE)
(72) Inventor: Pedersen, Leif, S-186 00 Vallentuna (SE)
(74) Representative: Falk, Bengt

(56) References cited:
- DE-A- 3 031 769
- GB-A- 1 193 567
- US-A- 3 663 105
- US-A- 4 469 417
- US-A- 4 653 905
- PATENT ABSTRACTS OF JAPAN, vol. 9, no. 68 (P-344)[1791], 28 th March 1985; & JP-A-59 202 011

## Description

### TECHNICAL FIELD

The present invention relates to an apparatus for obtaining, from an observation point, an indication of the range to a target, comprising two optical channels, the first ends of said optical channels being optically coupled to respective optical systems disposed substantially in parallel to each other and aiming at said target, and the second ends of said optical channels being coupled to an observation means.

### BACKGROUND ART

An apparatus according to the above for obtaining, from an observation point, an indication of the range is previously known from US-A-4 469 417. The ends of the optical channels are all fixedly disposed, while one of the optical systems coupled to the first end of one of the channels is movably disposed. Images of a target at the observation means are evaluated in a rather complex procedure to find out the range.

### SUMMARY OF THE INVENTION

### TECHNICAL PROBLEM

There is an urgent need in this art for simple apparatuses for indicating the range to a target. In this instance, it would be an advantage if the use of such an apparatus is also simple so that, for instance, target tracking at firearms can be carried out in conjunction with range finding. In certain physical cases of application, it is also advantageous if the equipment employed is low energy-consuming.

### SOLUTION

The object of the present invention is to propose an apparatus which solves the above-outlined and other problem structures. That which may substantially be considered as characterizing the novel apparatus according to the present invention that at least one of the optical channels comprises optical fibres having first ends located in the image plane of the optical system associated with said channel and second ends optically coupled to the other optical channel in such a way that the two images provided by said two optical channels are represented superposed in the same field of view of the observation means, and a displacement means for displacing said first or second end of one or both of said two optical channels with respect to the respective optical system is provided, said displacement means being arranged to displace one of the two images of said target provided by the respective optical channel with respect to the other from an initial position in order to superpose said two images of said target upon one another on said field of vision, where indication of said range to said target is given by the displacement produced by said displacement means and/or by means sensing said displacement.

In further developments of the inventive concept as herein disclosed, both optical channels comprise optical fibres. At the second end of the optical channels the optical fibres are disposed in an alternate sequence, every second fibre deriving from the first channels, and every second fibre deriving from the second channel.

In one alternative embodiment of the apparatus according to the present invention the second end of said optical are optically coupled to a beam splitter means in such a way that the two images provided by said two optical channels are superposed in a single field of vision.

The displacement means may consist of per se known devices and may, for instance, comprise a micrometer screw. In this arrangement, it may be appropriate to dispose the end (or ends) of but one channel shiftable in relation to the end (or ends) of the other channel.

The range indication may be effected by means of a device, for instance in the form of a transducer, sensing the parallel displacement. An electric signal may be obtained from the transducer which is connectable to signal processing equipment.

The novel apparatus according to the present invention is extremely well suited for use together with aimed weaponry of different types, for example anti-aircraft guns, guns mounted on tanks, etc.

### ADVANTAGES

From the relative parallel displacement of the fibre ends, a simple range indication may be obtained. The mechanical displacement of the fibre ends is technically simple. In fields of utilization in conjunction with weapons in which, for example, barrel elevation takes place, target tracking and range finding will be greatly simplified, in that the observation instrument need not be moved in elevation. Only the first ends of the fibre channels need execute elevation movements, which is made possible by the inherent flexibility of the fibre leads. At the observation side, a long distance may readily be utilized, between the first ends of the optical channels, and there is neither a need of free vision between the first ends.

### BRIEF DESCRIPTION OF THE ACCOMPANYING DRAWINGS

The nature of the present invention and its siginificant aspects will be more readily understood from the following brief description of the accompanying drawings, and description of one currently proposed embodiment of the present invention relating thereto.

In the accompanying drawings:
Fig 1 is a top-plan view illustrating the constructional principle of the different parts of the apparatus;
Fig 1a is a top-plan view showing, on a larger scale, the displaceability of the one channel end in relation to its associated optical system;
Fig. 2 shows the image of the target at the first end of the first channel;
Fig 3 shows the image of the target at the first end of the second channel;
Fig. 4 shows the two images according to Figs. 2 and 3 as they appear in the observation instrument at the other ends of the fibre cables, the first ends of the first and second channels being taken to have assumed an initial position in relation to one another;
Fig. 5 shows the two images superimposed on one another in the observation instrument, this superimposition having been realized by mutual parallel displacement of the first and second fibre optic channel ends;
Fig. 6 is a top-plan view showing pictorial superimposition by means of beam splitters at the observation end of the channels; and
Fig. 7 is a horizontal view showing the application of the apparatus according to the present invention to a firearm.

### DETAILED DESCRIPTION OF PREFERRED EMBODIMENT

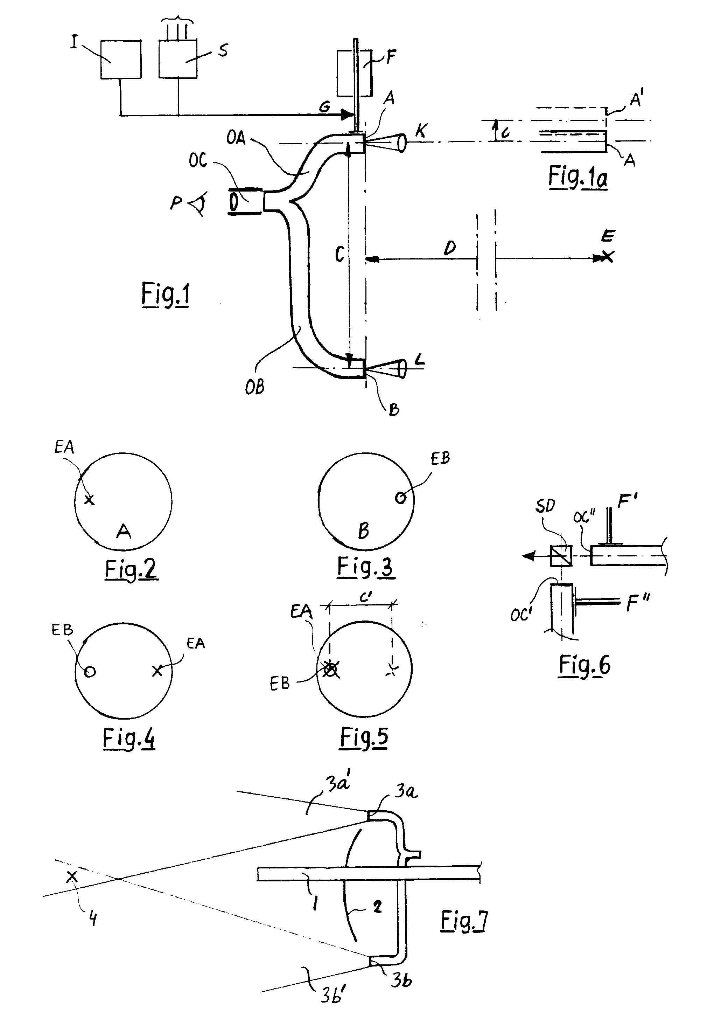

Referring now to the drawings, Fig. 1 shows a first channel OA consisting of fibre-optic cables and a second channel OB similarly consisting of fibre-optic cables. The first ends A and B, respectively, of the fibre-optic cables are disposed in parallel and are aimed at a target E. The distance between the first ends A and B disposed in parallel is indicated by C and the range from these ends to the target is indicated by D. Each respective channel of the above-mentioned channels OA and OB consists of a number (a bundle) of thin fibre-optic leads. The fibre-optic leads of the channels are intertwined at the other ends OC of the optic fibres. The intertwining is, in this instance, effected such that every second fibre in the end surface OC derives from the channel OA, and every second from the channel OB.

The channel ends A and B are disposed in the image plane each of its optical system K and L, respectively.

According to the inventive concept as herein disclosed, the above-mentioned first ends A and B, respectively are to be mutually displaceable in parallel, such that one or both of the channel ends now under consideration may be displaced in relation to its associated optical system K and L, respectively. This displacement has been indicated by c. This transverse displacement may be effected by displacement means F. The displacement means may consist of per se known devices and may comprise, for instance, a per se known calibrated micrometer screw. A device G, for example in the form of an electric transducer which senses the displacement, may be mounted on the displacement means and emits an electric signal corresponding to the executed displacement. The transducer may, for example, be in the form of a potentiometer. An indicator device I, for example a digital display, may be provided to receive the sensed electric signal which may also be impressed upon signal processing means S for, for example, governing a fire control calculator (not shown) or a corresponding calculator.

The displacement may be effected from a reference position, for example a position which corresponds to the solid lines of the end A. Figs. 1 and 1a illustrate the case in which but the one end A has been displaceably disposed, while the end B is assumed to be fixedly disposed. Naturally, the end B may also be provided with displacement means corresponding to that provided for the end A. Hence, either one or both of the ends may be mutually displaceable in parallel in relation each to their optical systems.

Thus, on image representation of the target E, two images will be obtained at the two first ends A and B. The position of the images in each respective end will be apparent from Figs. 2 and 3, Fig. 2 showing the position of the target image EA at the first end A, and Fig. 3 the position of the second target image EB at the first end B. For purposes of clarity, the image EA has been marked with a cross in the Figures, and the image EB with a ring.

The observer P sees a superimposed image at the second end surface OC. In the illustrated example, EB is located to the left and EA to the right. By radial mutual displacement of the first ends A, B, the images will be superimposed. In Fig. 5, this displacement in the end surface OC has been indicated by c'. The displacement may be indicated direct on the displacement means F and/or on the indicator device I, in which event the indication may be disposed in immediate association with the observer's field of vision at OC. The displacement may also be caused to govern directly the previously mentioned calculator.

In an alternative embodiment, the fibre ends may be displaceably disposed at the observation side. In this case, use is made, according to Fig. 6, of the channel ends/fibre ends in optic contact with one another, such that pictorial super-imposition occurs. In the present case, use is made of a super-imposition device, for example a beam splitter SD of per se known type. The channel ends and fibre ends, respectively, have been indicated by OC′ and OC˝, respectively. The displacement may be effected and be registered in the same manner as for the ends in the image plane. The displacement means have been shown by F′, F˝. In yet a further embodiment, the fibres (channels) are displaceable at both ends.

The size of the displacement C gives the range D to the target. Since the theories on which range finding is based are well known in the art, they will not be dealt with in greater detail here.

The novel range finding apparatus according to the present invention may substitute many laser applications. The fibre leads may be disposed in compact mechanics and take up but little space when not in use. The novel apparatus is of particular interest and relevance in armoured fighting vehicles which can present a sufficiently large base for the fibre optics. In such instance, the apparatus is disposed on the turret or lateral travel system on which the elevation system is mounted. The observation instrument (the second ends OC) need not accompany the elevation movements, which considerably simplifies target tracking and range finding.

The apparatus according to the present invention is also highly suitable for use in anti-aircraft systems. As an example, mention might be made of the anti-aircraft system type L60/70 where stays are provided on the right-hand side of the gun. This system requires the attention of two gun crew members, one tracking the target using, for example, the aiming mechanism, and the other, the gunnery observer, is required to track the target continuously within his field of vision. Both of these duties can now be discharged by a single crew member.

The apparatus according to the present invention operates with a minimum of electric power supply.

Fig. 7 shows an elevating barrel 1 disposed on a laterally travelling turret 2. The novel apparatus according to the present invention is generically shown by reference numeral 3. The ends 3a and 3b are aimed on the target 4 which is located within the lobes 3a′ and 3b′, respectively.

## Claims

1. An apparatus for obtaining, from an observation point, an indication of the range (D) to a target (E), comprising two optical channels (OA and OB), the first ends (A, B) of said optical channels being optically coupled to respective optical systems (K, L) disposed substantially in parallel to each other and aiming at said target, the second ends of said optical channels being coupled to an observation means (OC), **characterized in that:**
at least one of the optical channels comprises optical fibres having first ends (A, B) located in the image plane of the optical system associated with said channel and second ends optically coupled to the other optical channel in such a way that the two images provided by said two optical channels are represented superposed in the same field of view of the observation means (OC), and a displacement means (F; F', F'') for displacing said first or second end of one or both of said two optical channels with respect to the respective optical system is provided said displacement means being arranged to displace (c') one of the two images of said target (EA, EB) provided by the respective optical channel with respect to the other from an initial position in order to superpose said two images of said target upon one another on said field of vision, where indication of said range to said target is given by the displacement (c) produced by said displacement means and/or by means (G, I, S) sensing said displacement.

2. The apparatus as claimed in Claim 1 **characterized in that** both optical channels comprise optical fibres and said optical fibres of said two channels are, at the second end of said optical channels, disposed in an alternate sequence, every second fibre deriving from the first channel, and every second fibre deriving from the second channel.

3. The apparatus as claimed in Claim 1 **characterized in that** the second end of said optical channels are optically coupled to a beam splitter means (SD) in such a way that the two images provided by said two optical channels are superposed in a single field of vision.

4. The apparatus as claimed in Claim 1, 2 or 3, **characterized in that** said displacement means (F) are operative to act upon the one first end (A) in relation to each respective optical system.

5. The apparatus as claimed in any one of the preceding claims, **characterized in that** an indication device (I) is connected to said means (G) sensing the parallel displacement.

6. Tha apparatus as claimed in any one of the preceding claims, **characterized in that** signal processing means (S) are connected to said means (G) sensing said parallel displacement.

7. The apparatus as claimed in any one of the preceding claims, **characterized in that** it is disposed on an anti-aircraft piece or on a combat vehicle.

## Patentansprüche

1. Vorrichtung zur Anzeige der Entfernung aus (D) zu einem Ziel (E) von einem Beobachtungspunkt, mit zwei optischen Kanälen (OA und OB), deren erste Enden (A, B) an parallel zueinander angeordnete, zum Ziel gerichtete optische Systeme (KL) gekoppelt sind und deren zweite Enden an eine Beobachtungseinrichtung gekoppelt sind,
dadurch **gekennzeichnet,** daß mindestens einer der optischen Kanäle optische Fasern aufweist, deren erste Enden (A, B) in der Bildebene des diesem Kanal zugeordneten optischen Systems angeordnet sind und deren zweite Enden mit dem anderen optischen Kanal derart optisch gekoppelt sind, daß die beiden von den zwei optischen Kanälen gelieferten Bilder dem gleichen Blickfeld der Beobachtungseinrichtung (OC) überlagert erscheinen, und daß eine Verschiebungseinrichtung (F, F', F'') zum Verschieben des ersten oder zweiten Endes des einen oder beider optischen Kanäle relativ zum zugeordneten optischen System vorgesehen ist, wobei durch die Verschiebungseinrichtung eines der beiden von je einem optischen Kanal gelieferten Bilder (EA, EB) des Zieles relativ zum anderen Bild aus einer Ausgangsposition verschiebbar (c') ist, um die beiden Bilder des Ziels miteinander in dem Blickfeld zur Deckung zu bringen, wobei die Anzeige der Entfernung des Ziels durch die von der Verschiebungseinrichtung erzeugten Verschiebung (c) oder von einer diese Verschiebung erfassenden Einrichtung (G, I, S) gegeben ist.

2. Vorrichtung nach Anspruch 1,
dadurch **gekennzeichnet,** daß beide optische Kanäle optische Fasern aufweisen, und daß die optischen Fasern der beiden Kanäle am zweiten Ende der optischen Kanäle in abwechselnder Folge angeordnet sind, sodaß abwechselnd jede Faser von dem Erstkanal und die nächste Faser von dem zweiten Kanal kommt.

3. Vorrichtung nach Anspruch 1,
dadurch **gekennzeichnet,** daß die zweiten Enden der optischen Kanäle optisch mit einem Strahlteiler (SD) derart gekoppelt sind, daß die beiden von den zwei optischen Kanälen gelieferten Bilder in einem einzigen Blickfeld überlagert werden.

4. Vorrichtung nach Anspruch 1, 2 oder 3,
dadurch **gekennzeichnet,** daß die Verschiebungseinrichtung (F) auf eines der ersten Enden (A) relativ zu dem zugehörigen optischen System einwirkt.

5. Vorrichtung nach einem der vorangehenden Ansprüche,
dadurch **gekennzeichnet,** daß eine Anzeigeeinrichtung (I) mit der Einrichtung (G) zum Erfassen der Parallelverschiebung verbunden ist.

6. Vorrichtung nach einem der vorangehenden Ansprüche,
dadurch **gekennzeichnet,** daß Signalverarbeitungsmittel (S) mit den die parallelverschiebung erfassenden Mitteln (G) verbunden sind.

7. Vorrichtung nach einem der vorangehenden Ansprüche,
dadurch **gekennzeichnet,** daß sie an einem Flugabwehrgeschütz oder an einem Kampffahrzeug angeordnet ist.

## Revendications

1. Appareil destiné à l'obtention, à partir d'un point d'observation, d'une indication de la distance (D) d'une cible (E), comprenant deux canaux optiques (OA et OB), les premières extrémités (A, B) des canaux optiques étant couplées optiquement à des systèmes optiques respectifs (K, L) disposés pratiquement en directions parallèles et visant la cible, les secondes extrémités des canaux optiques étant couplées à un dispositif d'observation (OC), caractérisé en ce que
l'un au moins des canaux optiques comporte des fibres optiques ayant des premières extrémités (A, B) placées dans le plan image du système optique associé à ce canal et des secondes extrémités couplées optiquement à l'autre canal optique de manière que les deux images formées par les deux canaux optiques soient représentées sous forme superposée dans le même champ de vision du dispositif d'observation (OC), et un dispositif de déplacement (F ; F', F'') est destiné à déplacer la première ou la seconde extrémité de l'un au moins des deux canaux optiques par rapport au système optique respectif, ce dispositif de déplacement étant destiné à déplacer (c') l'une des deux images de la cible (EA, EB) données par le canal optique respectif par rapport à l'autre à partir d'une position initiale afin que les deux images de la cible soient superposées l'une à l'autre dans le champ de vision, et dans lequel l'indication de la distance de la cible est donnée par le déplacement (c) produit par le dispositif de déplacement et/ou par un dispositif (G, I, S) de détection du déplacement.

2. Appareil selon la revendication 1, caractérisé en ce que les deux canaux optiques comportent des fibres optiques, et les fibres optiques des deux canaux sont disposées, à la seconde extrémité des canaux optiques, sous forme alternée, une fibre sur deux dérivant du premier canal et une fibre sur deux du second canal.

3. Appareil selon la revendication 1, caractérisé en ce que la seconde extrémité des canaux optiques est couplée optiquement à un dispositif répartiteur de faisceau (SD) de manière que les deux images formées par les deux canaux optiques soient superposées dans un seul champ de vision.

4. Appareil selon la revendication 1, 2 ou 3, caractérisé en ce que le dispositif de déplacement (F) est destiné à agir sur la première extrémité (A) pour chaque système optique respectif.

5. Appareil selon l'une quelconque des revendications précédentes, caractérisé en ce qu'un dispositif indicateur (I) est connecté au dispositif (G) de détection du déplacement parallèle.

6. Appareil selon l'une quelconque des revendications précédentes, caractérisé en ce que le dispositif de traitement de signaux (S) est connecté au dispositif (G) de détection du déplacement parallèle.

7. Appareil selon l'une quelconque des revendications précédentes, caractérisé en ce qu'il est disposé sur une pièce antiaérienne ou un véhicule de combat.
